# EUROPEAN PATENT APPLICATION

(11) **EP 4 850 772 A1**
(43) Date of publication of application: **09.12.2026**
(21) Application number: 25778895.0
(22) Date of filing: 28.03.2025
(51) Int. Cl.: A62D 1/00, A62C 3/16, A62C 35/02, D04H 1/4209, H01M 50/204, H01M 10/42, H01M 50/24, A62D 1/06

(54) **COMPOSITE**

(30) Priority: 29.03.2024 KR 20240043096; 28.11.2024 KR 20240174264
(71) Applicant: LG Chem, Ltd., Seoul 07336 (KR)
(72) Inventor: KIM, Jang Hwan, Daejeon 34122 (KR); SHIN, Moo Kwang, Daejeon 34122 (KR); OH, Kyoung Shil, Daejeon 34122 (KR); LEE, Seung Min, Daejeon 34122 (KR); JUNG, Jin Mi, Daejeon 34122 (KR); KANG, Tae Gyeong, Daejeon 34122 (KR); OH, Myung Eun, Daejeon 34122 (KR); LEE, Hong Chan, Daejeon 34122 (KR)
(74) Representative: Hoffmann Eitle
(86) International application number: PCT/KR2025/004082
(87) International publication number: WO 2025/206833

(57) **Abstract**

The present specification discloses a composite material and a fire-extinguishing device, which are applied to products or elements being in an abnormal state or having potential for an abnormal state, thereby enabling to effectively respond to the abnormal state. For example, the composite material or the like can be applied to an article comprising multiple products or elements to respond to abnormal heat generation, explosion, or ignition occurring in one element or product, and prevent or minimize the spread of such heat generation, explosion, or ignition to adjacent elements or products. The composite material or the like also exhibits excellent handleability and storage stability. The present specification can also provide a use of the composite material or the like.

## Description

### Technical Field

This application claims the benefit of priority to Korean Patent Application No. 10-2024-0043096 dated March 29, 2024, and Korean Patent Application No. 10-2024-0174264 dated November 28, 2024, all the disclosures of which are incorporated herein by reference.

The present specification discloses a composite material, a fire-extinguishing device comprising the composite material, and a use of the composite material and the fire-extinguishing device.

### Background Art

The importance of technology for processing heat generated from products becomes bigger, but treatment, maintenance, and control of heat in products composed of multiple heat-generating elements (heating elements) are difficult problems.

For example, it is very important to prevent a so-called TR (Thermal Runaway) or TP (Thermal Propagation) phenomenon occurring in a battery module or a battery pack. A battery module or a battery pack comprises a plurality of battery cells or a plurality of battery modules, which are positioned relatively adjacent to each other.

In such a structure, the phenomenon in which abnormal heat generation, ignition, and/or explosion, and the like occurring in one battery cell and/or battery module is transmitted to other adjacent battery cells in a chain is called the TR or TP phenomenon. Chain ignition or chain explosion caused by such a TR or TP phenomenon must be managed in terms of safety.

### Disclosure

### Technical Problem

The present specification discloses a composite material, a fire-extinguishing device, and a use thereof. The present specification is intended to disclose a composite material and a fire-extinguishing device, which are applied to a product or an element that an abnormal state has occurred, or having possibility of developing the abnormal state, thereby enabling to effectively respond to the abnormal state.

For example, the composite material and fire-extinguishing device disclosed herein are applied to an article comprising multiple products or elements, whereby it is possible to prevent or minimize the abnormal state occurring in any one product or element from being transmitted to other products or elements.

It is also one object of the present specification to disclose the composite material and fire-extinguishing device having excellent handleability and storage stability. It is also another object of the present specification to disclose a use of the composite material and the fire-extinguishing device.

### Technical Solution

Among physical properties mentioned herein, the physical property in which a temperature affects the physical property is a physical property measured at room temperature, unless otherwise specified.

The term room temperature is a natural temperature without being artificially heated or cooled, which means, for example, a temperature within a range of about 10°C to 30°C, for example, a temperature of about 23°C or about 25°C or so.

Unless otherwise specified, the unit of temperature mentioned herein is °C.

Among physical properties mentioned herein, when a pressure affects the results, the relevant physical property is a physical property measured at normal pressure, unless otherwise specified.

The term normal pressure is a natural pressure without being artificially pressurized or depressurized, wherein typically a pressure within a range of about 700 mmHg to 800 mmHg or so is referred to as the normal pressure.

Among physical properties mentioned herein, when a humidity affects the results, the relevant physical property is a physical property measured at a humidity without being artificially adjusted under the room temperature and normal pressure conditions, unless otherwise specified.

In this specification, the term abnormal state refers to a state where abnormal heat generation, ignition, and/or explosion has occurred in any product or element, or there is a risk of the abnormal heat generation, ignition, and/or explosion.

In this specification, the term normal state refers to a state of any product or element without the abnormal state.

The present specification discloses a composite material.

The present specification also discloses a fire-extinguishing device comprising the composite material.

The fire-extinguishing device comprises a case having a sealed space inside and a composite material present in the sealed space.

For example, the fire-extinguishing device may comprise a case, and the composite material may be present in the case. The case may have a sealed interior space, and the composite material may be present in such a sealed space.

The case is a container for maintaining the composite material. The case has the sealed space inside. The matter that the case has the sealed space inside means that the case is present in a state where the sealed space is formed inside the case, or so that a certain space exists inside the case, and the space is not in a sealed state, but the sealed space can be formed in a manner of sealing the open portion. The sealed space means a space formed so that components such as the composite material substantially do not leak to the outside under the normal state.

In one example, the case may include a portion having a WVTR (Water Vapor Transmission Rate) in a predetermined range, as described below. For example, at least the sealed space in which the composite material is present may be substantially surrounded by a portion having a WVTR (Water Vapor Transmission Rate) in a predetermined range, as described below.

The case has a vent region. The term vent region may mean a region where it is sealed in a first state to be present so that the sealed state can be maintained, but is open in a second state so that all or a part of the materials inside the space can be discharged. The second state may mean, for example, an abnormal state to be described below, and the first state may mean a normal state to be described below. Such a vent region may be formed in a manner to be described below.

In one example, the case may include a portion having a WVTR (Water Vapor Transmission Rate) in a predetermined range. For example, in the sealed space inside the case, the space in the sealed state may entirely be surrounded by a material having a WVTR in the range as described below. Here, the matter that the sealed space in the sealed state is surrounded entirely by a material having a specific WVTR means that the space is substantially surrounded by the material, and for example, it means that 80% to 100%, 85% to 100%, 90% to 100%, 95% to 100%, or substantially 100% of the area of the case forming the sealed space has the specific WVTR. The upper limit of the WVTR (Water Vapor Transmission Rate) may be 10, 9.5, 9, 8.5, 8, 7.5, 7, 6.5, 6, 5.5, 5, 4.5, 4, 3.5, 3, 2.5, 2, 1.5, 1, 0.5, 0.45, 0.4, 0.35, 0.3, 0.25, 0.2, 0.15, 0.1, 0.05, 0.01, 0.005, or 0.001 or so, and the lower limit thereof may be 0, 0.1, 0.2, 0.3, 0.4, or 0.5 or so. The WVTR may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. By having such a WVTR, it is possible to ensure storage stability for the composite material present inside the sealed space, and the fire-extinguishing device can more efficiently exhibit its intended fire-extinguishing action.

The unit of the WVTR (Water Vapor Transmission Rate) may be g/m²·day, and it may be evaluated in a manner described in "1. WVTR (Water Vapor Transmission Rate) evaluation" of Example sections of this specification.

The fire-extinguishing device is configured so that in the normal state, the composite material may be maintained in the sealed space, and then in the abnormal state, the internal vaporizable substances may be effectively released to the outside.

Such an action will be described assuming the fire-extinguishing device is applied to a battery module.

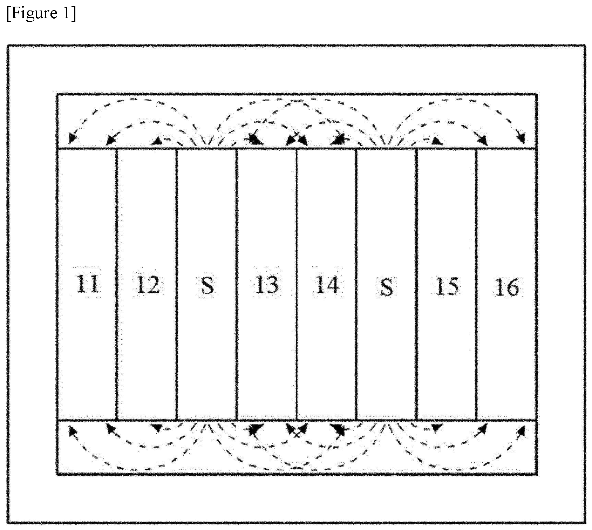

Figure 1 is a schematic diagram in the case where the fire-extinguishing device (S) is applied to a battery module. As in Figure 1, the battery module may be configured by adjacently multiple battery cells (11, 12, 13, 14, 15, and 16), where the fire-extinguishing device (S) may be disposed between battery cells (e.g., between 12 and 13 and/or between 14 and 15 in Figure 1).

In the normal state, the fire-extinguishing device (S) maintains vaporizable substances and the like inside. If it is in the abnormal state, the internal substances may be ejected from the fire-extinguishing device (S) through the vent region (dotted arrows in Figure 1), and the internal substances thus ejected may respond to heat generation, flames, and/or explosions in the abnormal state. In Figure 1, the case where the internal substances are ejected from both directions of the upper and lower ends in the fire-extinguishing device (S) is described, but the ejection direction is not limited to Figure 1. The ejection direction may also be in one direction of the fire-extinguishing device (S), and may also be in two or more directions.

In order that the fire-extinguishing device effectively performs the function in the abnormal state, it is required that the vaporizable substances and the like present inside the case in the normal state are stably maintained, that the internal substances can be rapidly discharged to the outside when an abnormal state occurs, and that most of the vaporizable substances present inside the case in the abnormal state can be discharged to the outside in a vaporized state as much as possible and exhausted.

In order that the fire-extinguishing device effectively performs the function in the abnormal state, a vaporization rate of the vaporizable substances must be maintained appropriately. If the vaporizable substances vaporize at an appropriate rate, it is possible to prevent collapse of internal pores due to changes in surface tension, and the like after latent heat consumption.

The fire-extinguishing device disclosed herein can satisfy the requirements.

A principle in which the fire-extinguishing device performs the action is explained.

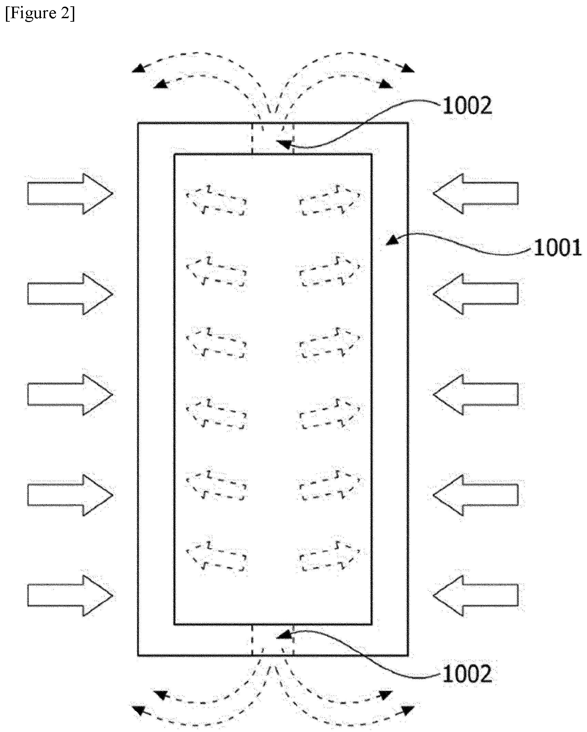

Figure 2 shows only the fire-extinguishing device (S) in Figure 1 separately. In a configuration such as Figure 1, if abnormal heat generation, abnormal ignition, and/or abnormal explosion occurs in at least one of the battery cells adjacent to the fire-extinguishing device (S), heat in a certain level or more is instantaneously applied to the fire-extinguishing device as indicated by the solid arrows in Figure 2. In Figure 2, as indicated by dotted arrows in the internal sealed space of the case (1001) of the fire-extinguishing device, vaporizable substances propagate randomly in all directions within the space, where in the case where the WVTR of the portion forming the sealed space of the case (1001) is in the above-described range, the vaporized gas cannot be released to the outside, so that the interior of the case (1001) becomes a very high-pressure state. In this instance, when the vent region (1002) of the case is configured to be opened momentarily at a high pressure in a certain level or more, the vent region (1002) is opened momentarily in the high-pressure state, and the internal gas is quickly discharged to the outside through the opened vent region (1002).

When the WVTR of the case is high, the internal pressure of the case (1001) does not effectively increase in the abnormal state, whereby the opening of the vent region (1002) may not be effectively performed, or even when the vent region (1002) is opened, the internal pressure is not sufficient, whereby all the internal gases may not be discharged to the outside and exhausted, or an appropriate discharge rate may not be secured.

When the WVTR of the case is kept low, the storage stability of internal substances can also be effectively secured in the normal state.

The method for forming the vent region (1002) is not particularly limited. The vent region may be formed by designing so that a certain region of the case forming the sealed space may be opened when a certain level of pressure and/or heat has been applied thereto. For example, if some regions of the case forming the sealed space are configured to have lower strength than other regions, the portion having the lower strength may be opened by the increased internal pressure. In addition, by forming a sealed space through sealing using a hot melt material, and the like, it is also possible to use a method in which opening occurs by melting at a predetermined temperature, and the like. In another method, the vent region may be formed by making only a certain portion of the case forming the sealed space to have a thinner thickness relative to other regions. Such a method of forming the vent region can be easily adopted by those skilled in the art.

For example, when the fire-extinguishing device is applied to a battery module or pack, for the convenience of application, the case may be a rectangular case, a pouch-shaped case, and/or a cylindrical case, which is the same shape as the battery cell. In this case, the vent region may also be formed by a method of controlling the bonding strength of the cover forming the sealed space in the rectangular or cylindrical case.

The case may be formed using a known material if it may satisfy the above-described WVTR, where the material may have a single-layered structure or a multi-layered structure of two or more layers.

For example, the case may be formed using a material, which may exhibit the WVTR in the above range, of an appropriate organic layer and/or inorganic layer.

As the organic layer, for example, a known polymer film or sheet may be used. The organic film may be exemplified by a cellulose-based polymer film; a COP (cyclo olefin polymer) film; an acrylic polymer film; a polyolefin film; a PVA (polyvinyl alcohol) film; a PVC (poly(vinyl chloride)) film, a PES (poly ether sulfone) film; a PEEK (polyetheretherketon) film; a PPS (polyphenylsulfone) film; a PEI (polyetherimide) film; a PEN (polyethylenenaphthatlate) film; a polyester film such as a PET (poly(ethylene terephthalate)) film; a PI (polyimide) film; a PSF (polysulfone) film and/or a PAR (polyarylate) film, and the like.

For example, a metal layer, a metal oxide layer, a metal nitride layer, or a metal oxynitride layer, and the like may be used as the inorganic layer. For example, the inorganic layer may be a metal layer, a metal oxide layer, a metal nitride layer, or a metal oxynitride layer, and the like, which contains one or more selected from the group consisting of In, Sn, Pb, Au, Cu, Ag, Zr, Hf, Zn, Al, Si, La, Ti, and Ni. For example, a foil, sheet, or film of the material may be applied, or a layer formed by depositing the metal layer, the metal oxide layer, the metal nitride layer, or the metal oxynitride layer on an appropriate base material may be used.

The material forming the case may be any single layer selected from the inorganic layer and the organic layer, or a multilayered structure in which two or more of the layers are laminated.

The thickness of the inorganic layer and/or the organic layer is selected in consideration of the physical properties such as the desired WVTR, which is not particularly limited. For example, the lower limit of the thickness may be 1 µm, 5 µm, 10 µm, 15 µm, 20 µm, 25 µm, or 30 µm or so, and the upper limit thereof may be 5,000 µm, 4,000 µm, 3,000 µm, 2,000 µm, 1,000 µm, 500 µm, 200 µm, 150 µm, 100 µm, 90 µm, 80 µm, 70 µm, 60 µm, 50 µm, 40 µm, or 30 µm or so. The thickness may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The extinguishing device may comprise additional constitutions so that the action is performed more effectively.

For example, the fire-extinguishing device may further comprise a thermally conductive layer. Such a thermally conductive layer may be present at an appropriate location within the fire-extinguishing device, and for example, the thermally conductive layer may be present between the case and a composite material to be described below.

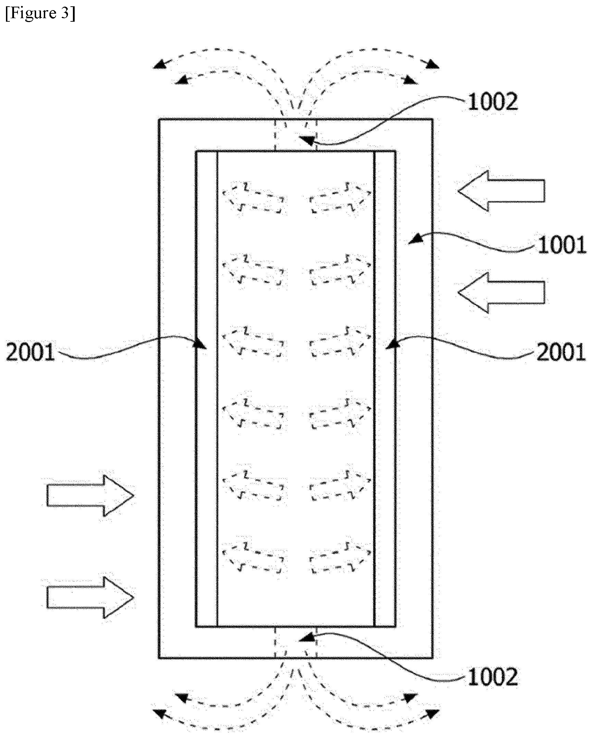

Figure 3 is an example of a case where the thermally conductive layer (2001) is added thereto in the fire-extinguishing device of Figure 2. The thermally conductive layer may be present between the case (1001) and the composite material, as in Figure 3, but its location is not limited thereto. The thermally conductive layer may be present at other locations, such as the inside of the case, and the number thereof may also be one, or a plurality of two or more.

The term thermally conductive layer is a layer whose thermal conductivity (based on 20°C) is in a range to be described below. The lower limit of the thermal conductivity (based on 20°C) of the thermally conductive layer may be 15, 18, 20, 50, 100, 150, 200, 250, 300, 350, or 400 or so, and the upper limit thereof may be 2,000, 1,500, 1,000, 900, 800, 700, 600, 500, 400, 300, 200, 100, or 50 or so. The thermal conductivity may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The unit of the thermal conductivity is W/m·K.

The type of the thermally conductive layer is not particularly limited if it has the thermal conductivity. Usually, metal materials may be used as the thermally conductive layer because they have excellent thermal conductivity properties. For example, a layer made of a metal material such as aluminum, gold, pure silver, tungsten, copper, nickel, or platinum may be applied.

The thickness of the thermally conductive layer is not particularly limited, where an appropriate thickness may be set in consideration of the specifications of the fire-extinguishing device, and the like. For example, the lower limit of the thickness of the thermally conductive layer may be 1 µm, 5 µm, 10 µm, 15 µm, 50 µm, 75 µm, or 90 µm or so, and the upper limit thereof may be 500 µm, 400 µm, 300 µm, 200 µm, 100 µm, 50 µm, 40 µm, or 30 µm or so. The thickness may be within a range of less than or equal to, or less than any upper limit selected from the above-listed upper limits; within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

As shown in Figure 3, in some cases, the heat generated in an abnormal state may not be uniformly applied to the fire-extinguishing device, but may also be locally applied to only a certain region. However, in order that the vaporizable substance inside the fire-extinguishing device quickly vaporizes to achieve a high-pressure state, the heat in the abnormal state must be uniformly applied to the fire-extinguishing device. In the case where the thermally conductive layer exists, even if the heat in the abnormal state is locally applied, it may quickly transfer the relevant heat throughout the fire-extinguishing device, and accordingly the fire-extinguishing action of the fire-extinguishing device as described above may occur quickly and efficiently.

The present specification discloses a composite material. The composite material can be present in the sealed space of the fire-extinguishing device.

The term composite material means a material comprising two or more components. The material may also further comprise other components if it contains at least two components.

In the composite material, a thickness change rate before and after high-temperature exposure may be controlled.

For example, in the composite material, an absolute value of ΔT in Equation 1 below may be controlled within a predetermined range. [Equation 1] $ΔT = 100 \times \left({T}_{i}-{T}_{f}\right) / {T}_{f}$

In Equation 1, T_{f} is the thickness of the composite material after being maintained at a temperature T for 1 hour, and Tᵢ is the thickness of the composite material before being maintained at a temperature T for 1 hour.

Such a thickness of the composite material is measured in the manner described in "6. Thickness measurement" of Example sections in this specification.

The temperature T for determining ΔT in Equation 1 above satisfies Equation 2 below. [Equation 2] $45 ° C to 55 ° C = T - {T}_{b}$

In Equation 2, T is the temperature T for determining ΔT in Equation 1, and T_{b} is a boiling point of a vaporizable substance, which is included in the composite material and described below, at 1 atm.

The upper limit of the absolute value of ΔT in Equation 1 above may be 12%, 11%, 10%, 9%, 8%, 7%, 6%, 5%, or 4.5% or so, and the lower limit thereof may be 0%, 1%, 2%, 3%, or 4% or so. The ΔT may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

Specifically, the matter that ΔT is within the above range means that in the abnormal state, the discharge rate of vaporizable substances within the composite material is appropriately controlled, and even after the discharge of the vaporizable substances, a state where the residual components within the composite material can appropriately exhibit performance of an insulating or heat-shield material is maintained. To adjust ΔT within the above range, the types, and amounts of components within the composite can be controlled. For example, a network compactness degree of the inorganic gel to be described below can be controlled, and the thickness change rate of the inorganic fibers or the type or ratio of the ionic compound can be controlled.

The composite material may comprise a vaporizable substance. Such a vaporizable substance may, in some cases, be supported inside an inorganic gel and/or inorganic fibers to be described below. The term vaporizable substance means a substance vaporizing at a given temperature. Such a vaporizable substance may exist in a liquid phase at room temperature (25°C). Such a vaporizable substance may be used, to reduce heat through heat exchange or the like, or to eliminate flames generated by ignition and/or explosion, in an abnormal state of a target adjacent to the fire-extinguishing device. Such a vaporizable substance may rapidly vaporize in the abnormal state, thereby increasing the pressure of the sealed space, opening the vent region, and being discharged to the outside through the opened vent region.

As the vaporizable substance, a substance may be used without any special limitation if it is vaporizable and non-flammable. For example, as the vaporizable substance, a solvent having a freezing point and/or boiling point within a predetermined range may be used.

For example, the lower limit of the freezing point of the vaporizable substance may be -5°C, -4°C, -3°C, -2°C, -1°C, or 0°C or so, and the upper limit thereof may be 10°C, 9°C, 8°C, 7°C, 6°C, 5°C, 4°C, 3°C, or 2°C or so. The freezing point may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The freezing point is the freezing point under 1 atm.

In order that the vaporizable substance effectively responds to the abnormal state, it may be advantageous that it is a substance which is vaporizable at least by heat generated in the abnormal state, and to this end, the boiling point of the vaporizable substance may be controlled.

The lower limit of the boiling point of the vaporizable substance may be 80°C, 85°C, 90°C, or 95°C or so, and the upper limit thereof may be 120°C, 115°C, 110°C, or 105°C or so. The boiling point may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The boiling point is the boiling point under 1 atm.

As the vaporizable substance, any appropriate type may be selected and used without any special limitation if it has a freezing point and/or boiling point within the above range and is non-flammable. A representative example of such a vaporizable substance is water, and accordingly, water may be used as the vaporizable substance, but the type of applicable vaporizable substances is not limited to the foregoing.

The lower limit of the ratio of the vaporizable substance in the composite material may be, for example, 10 weight%, 15 weight%, 20 weight%, 25 weight%, 30 weight%, 35 weight%, 40 weight%, 45 weight%, 50 weight%, 55 weight%, 60 weight%, 65 weight%, 70 weight%, 75 weight%, or 80 weight% or so, and the upper limit thereof may be 95 weight%, 90 weight%, 85 weight%, 80 weight%, 75 weight%, 70 weight%, 65 weight%, 60 weight%, 55 weight%, 50 weight%, 45 weight%, or 40 weight% or so. The proportion may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The desired properties, such as a heat absorption amount, can be achieved through adjustment of the content of the vaporizable substance.

The ratio is a ratio calculated in a state where the sum of the weights of all materials present in the composite material is 100 weight%.

The composite material may comprise additional components, to ensure the appropriate fire-extinguishing function and the thickness change rate, and the like.

The composite material may further comprise an inorganic gel and/or inorganic fibers. Such an inorganic gel and/or inorganic fibers enable the composite material to exhibit the above-described thickness change rate and, if necessary, may serve to support some of or all the above-described components, such as the vaporizable substance.

The inorganic gel may be, for example, an oxide network formed by a so-called sol-gel process. Such an oxide network may include a network that inorganic elements are linked via oxygen atoms. The inorganic element may be exemplified by one or more selected from the group consisting of silicon, titanium, zirconium, niobium, tantalum, molybdenum, and tungsten. For example, if the inorganic element is silicon, the inorganic gel may be a silica gel.

The desired thickness change rate can be achieved through control of a network compactness degree, and functional groups, and contents, and the like in the inorganic gel.

The lower limit of the ratio of the inorganic gel in the composite material may be, for example, 0.1 weight%, 0.5 weight%, 1 weight%, 1.5 weight%, 2 weight%, 2.5 weight%, or 3 weight% or so, and the upper limit thereof may be, for example, 13 weight%, 12 weight%, 11 weight%, 10 weight%, 9 weight%, 8 weight%, 7 weight%, 6 weight%, 5 weight%, 4 weight%, 3 weight%, or 2 weight% or so. The ratio may be within a range of less than or equal to, or less than any upper limit arbitrarily selected from the above-listed upper limits while being more than or equal to, or more than any lower limit arbitrarily selected from the above-listed lower limits. The ratio is a ratio calculated in a state where the sum of the weights of all materials present in the composite material is 100 weight%.

In another example, the lower limit of the content of the inorganic gel relative to 100 parts by weight of the vaporizable substance may be 0.001 parts by weight, 0.005 parts by weight, 0.01 parts by weight, 0.05 parts by weight, 0.1 parts by weight, 0.15 parts by weight, 0.2 parts by weight, 0.25 parts by weight, 0.3 parts by weight, 0.4 parts by weight, 0.5 parts by weight, 1 part by weight, 3 parts by weight, 5 parts by weight, 10 parts by weight, 15 parts by weight, or 20 parts by weight or so, and the upper limit thereof may be 25 parts by weight, 20 parts by weight, 15 parts by weight, 10 parts by weight, 5 parts by weight, 4 parts by weight, 3 parts by weight, 2 parts by weight, 1 part by weight, or 0.5 parts by weight or so. The ratio may be within a range of less than or equal to, or less than any upper limit arbitrarily selected from the above-listed upper limits while being more than or equal to, or more than any lower limit arbitrarily selected from the above-listed lower limits.

As the inorganic fibers, for example, inorganic fibers commonly used in the formation of insulating materials may be used, and an example thereof may be exemplified by so-called glass fibers and/or ceramic fibers, and the like. Such inorganic fibers may exist in the form of, for example, woven or nonwoven fabrics. In the category of the woven or nonwoven fabrics, objects referred to as paper, wool, or blanket may also be included.

For example, as the inorganic fibers, ceramic paper, ceramic paper using an organic/inorganic binder, binder-free fibers, ceramic fibers, glass fibers, glass felt, basalt fibers, basalt felt, aramid fabric, silica felt, oxpan carbon felt, carbon fiber felt, and/or melamine fibers, and the like may be used, and an organic binder may be used. When the inorganic fibers are used, it is possible to have excellent insulation, and materials such as gels and heat absorbents can be evenly positioned within a base material, as the sol is easily absorbed, thereby increasing stability.

The properties of the inorganic fibers may be adjusted according to the purpose.

For example, the thickness change rate of the inorganic fiber may also be adjusted, to satisfy ΔT of Equation 1 above.

For example, as the inorganic fibers, inorganic fibers having ΔT_{F} of Equation 3 below within a predetermined range may be selected. Measurement of the thickness for determining ΔT_{F} of Equation 3 below may be performed in the manner described in "6. Thickness measurement" of Example sections in this specification. [Equation 3] ${ΔT}_{F} = 100 \times \left({T}_{Fi}-{T}_{Ff}\right) / {T}_{Ff}$

In Equation 3, T_{Ff} is the thickness of the inorganic fibers after maintaining them at a temperature T for 1 hour, and T_{Fi} is the thickness of the inorganic fibers before maintaining them at a temperature T for 1 hour.

The temperature T in Equation 3 above satisfies Equation 2 above. That is, the temperature for confirming ΔT in Equation 1 and the temperature for confirming ΔT_{F} in Equation 3 are the same.

The upper limit of the absolute value of ΔT_{F} in Equation 3 may be 13%, 12%, 11%, 10%, 9%, 8%, 7%, 6%, 5%, or 4% or so, and the lower limit thereof may be 0%, 1%, 2%, 3%, or 4% or so. The ΔT_{F} may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The inorganic fibers, in a state of being included in the composite material, may exhibit ΔT_{F} in the above range. Therefore, for example, if the inorganic fibers are included in the composite material in the form of a woven or nonwoven fabric, the woven or nonwoven fabric may exhibit ΔT_{F} in the above range.

The inorganic fibers may have a moisture absorption rate according to ASTM-C 1511 standard within a predetermined range. For example, the lower limit of the moisture absorption rate may be 55%, 57%, 59%, or 61% or so, and the upper limit thereof may be 100%, 95%, 90%, 85%, 80%, 75%, 70%, or 65% or so. The moisture absorption rate may be evaluated according to ASTM-C 1511 standard. The moisture absorption rate may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The inorganic fibers can exhibit the moisture absorption rate within the above range in a state of being included in the composite material. Therefore, for example, if the inorganic fibers are included in the composite material in the form of a woven or nonwoven fabric, the woven or nonwoven fabric can exhibit the moisture absorption rate.

For example, the lower limit of the tensile strength of the inorganic fibers may be 0.5, 1, 5, 10, 50, 70, 90, 95, or 100 or so, and the upper limit thereof may be 500, 450, 400, 350, 300, 250, 200, 150, 100, 80, 60, 40, 20, 15, or 10 or so. The tensile strength may be within a range of less than or equal to, or less than any upper limit arbitrarily selected from the above-listed upper limits while being more than or equal to, or more than any lower limit arbitrarily selected from the above-listed lower limits. The unit of the tensile strength is kPa.

For example, the lower limit of the compressive strength of the inorganic fibers may be 1, 5, 8, 10, 50, 100, 110, 120, 130, 140, 145, or 150 or so, and the upper limit thereof may be 500, 450, 400, 350, 300, 250, 200, 150, 100, 50, 40, 30, 20, 15, or 10 or so. The compressive strength may be within a range of less than or equal to, or less than any upper limit arbitrarily selected from the above-listed upper limits while being more than or equal to, or more than any lower limit arbitrarily selected from the above-listed lower limits. The unit of the compressive strength is kPa.

For example, the lower limit of the Young's modulus of the inorganic fibers may be 0.1, 0.5, 1, 1.5, 2, 2.5, or 3 or so, and the upper limit thereof may be 20, 18, 16, 14, 12, 10, 8, 6, or 4 or so. The Young's modulus may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits. The unit of the Young's modulus is MPa.

The inorganic fibers may exhibit at least one of the tensile strength, the compressive strength, and the Young's modulus within the above range in a state of being included in the composite material. Thus, for example, if the inorganic fibers are included in the composite material in the form of the woven or nonwoven fabric, the woven or nonwoven fabric may exhibit at least one of the tensile strength, compressive strength, and Young's modulus within the above range. The tensile strength, compressive strength, and Young's modulus can be measured according to KS K ISO 9073-3 standard.

The lower limit of the density of the inorganic fibers may be 0.01, 0.05, or 0.1 or so, and the upper limit thereof may be 10, 8, 6, 4, 2, 1, 0.5, or 0.3 or so. The density may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The unit of the density is g/cm³.

The inorganic fibers can exhibit a density within the above range in a state of being included in the composite material. Therefore, for example, if the inorganic fibers are included in the composite material in the form of the woven or nonwoven fabric, the woven or nonwoven fabric can exhibit the above density.

When the inorganic fibers are included in the form of the woven or nonwoven fabric, the thickness of the woven or nonwoven fabric may be selected from the range capable of exhibiting the above-described characteristics. For example, the lower limit of the thickness may be 0.01 mm, 0.05 mm, 0.1 mm, 0.5 mm, 1 mm, 1.5 mm, 2 mm, 2.5 mm, or 3 mm or so, and the upper limit thereof may be 100 mm, 50 mm, 30 mm, 10 mm, 8 mm, 6 mm, or 4 mm or so. The thickness may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits.

The lower limit of the ratio of the inorganic fibers in the composite material may be, for example, 0.5 weight%, 1 weight%, 5 weight%, 10 weight%, 15 weight%, or 20 weight% or so, and the upper limit thereof may be 60 weight%, 40 weight%, 30 weight%, 25 weight%, 20 weight%, 15 weight%, or 10 weight% or so. The ratio may be within a range of less than or equal to, or less than any upper limit arbitrarily selected from the above-listed upper limits while being more than or equal to, or more than any lower limit arbitrarily selected from the above-listed lower limits. The ratio is a ratio calculated in a state where the sum of the weights of all materials present in the composite material is 100 weight%.

In another example, the lower limit of the weight ratio of the inorganic fibers relative to 100 parts by weight of the vaporizable substance may be 0.5 parts by weight, 1 part by weight, 5 parts by weight, 7 parts by weight, 7.5 parts by weight, 8 parts by weight, 8.5 parts by weight, 10 parts by weight, 15 parts by weight, 20 parts by weight, 30 parts by weight, 35 parts by weight, 40 parts by weight, 50 parts by weight, 60 parts by weight, 70 parts by weight, or 75 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, or 20 parts by weight or so. The ratio may be within a range of less than or equal to, or less than any upper limit arbitrarily selected from the above-listed upper limits while being more than or equal to, or more than any lower limit arbitrarily selected from the above-listed lower limits.

When the inorganic fibers and the inorganic gel are present simultaneously, the inorganic gel may be attached to the inorganic fibers, or the inorganic gel and the inorganic fibers may be present in a state of being entangled with each other. For example, as described below, the structure as above may be realized by performing a gelation process in the presence of the inorganic fibers, whereby the composite material can more effectively perform the desired performance and function.

The composite material may further comprise an ionic compound. The term ionic compound is a compound capable of dissociating to form ions, where an example thereof includes acids, bases, and salts, and the like.

The ionic compound may be a catalyst applied to form the inorganic gel, or a freezing point regulator or a carbonization catalyst as described below. The ionic compound may be included in the composite material in an undissociated state, i.e., a state without forming ions, or may be included in the composite material in a state where ions are formed by dissociation.

The ionic compound plays a crucial role in forming an inorganic gel with the desired network structure and functional groups, and in allowing that the composite material exhibits the desired effects in a wide temperature range.

As described below, the inorganic gel may be formed by polymerizing a metal alkoxide within the vaporizable substance (a sol-gel process). The metal alkoxide has a condensable functional group, and such a condensable functional group typically exhibits polarity. Therefore, the compactness degree and polarity of the network structure of the inorganic gel formed by polymerizing the alkoxide may be determined by the residual amount of the condensable functional group. Meanwhile, the ionic compound, when present, can induce a so-called freezing point depression phenomenon in the vaporizable substance. The freezing point of the medium in which polymerization proceeds is related to attractive forces between constituent molecules and molecular energy of the medium. Therefore, the ionic compound affects the polymerization efficiency in conjunction with the polymerization temperature, and the result becomes one factor that determines the network density or a crosslinking degree of the inorganic gel, and the residual amount of condensable functional groups.

Furthermore, the composite material can stably exhibit the desired effect even at relatively low temperatures by the freezing point determined according to the addition of the ionic compound, the vaporization rate of the vaporizable substance can be adjusted to a range capable of exhibiting the desired ΔT, and a carbonization layer formation efficiency of a carbonizable organic substance to be described below can also be determined.

For example, the ionic compound may be present in an amount such that ΔT_{f} in Equation 4 below falls within a predetermined range. [Equation 4] ${ΔT}_{f} = {K}_{f} \times M \times I$

In Equation 4, K_{f} is the freezing point depression constant of the vaporizable substance, M is the molal concentration of the ionic compound relative to the vaporizable substance, and I is the mole number of ions generated when 1 mole of the ionic compound has dissociated.

K_{f} in Equation 4 is the freezing point depression constant of the vaporizable substance, and its unit is K/m or °C/m. For example, if the vaporizable substance is water, K_{f} is 1.86.

In Equation 4, M is the molal concentration of the freezing point regulator, which is the molal concentration relative to the vaporizable substance. Therefore, the M is the mole number of the ionic compound present per 1 kg of the vaporizable substance in the composite material.

In Equation 4, I is the number (mole number) of ions formed by 1 mole of the ionic compound when the ionic compound has dissociated, where the dissociation means a state in which the freezing point regulator is completely dissociated.

When multiple ionic compounds as two or more are present in the composite material, the ΔT_{f} is calculated for each compound, and the sum of these values is used as the ΔT_{f} value for the composite material.

The lower limit of ΔT_{f} in Equation 4 may be, for example, 5, 10, 15, 20, or 25 or so, and the upper limit thereof may be 50, 45, 40, 35, 30, 25, 20, or 15 or so. The ΔT_{f} may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The unit of ΔT_{f} in Equation 4 is °C. By adjusting the content of the ionic compound within the above range, the above-described purpose can be achieved.

In order that the ionic compound included in the above content exerts an appropriate effect, the solubility of the ionic compound in the vaporizable substance (e.g., water) may be adjusted.

For example, the lower limit of solubility of the ionic compound in 100 g of water at 25°C may be 10 g, 15 g, 20 g, 25 g, 30 g, 35 g, 40 g, 45 g, 50 g, 55 g, 60 g, 65 g, 70 g, 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, 215 g, 225 g, 230 g, 235 g, 240 g, 255 g, 260 g, 265 g, 270 g, 275 g, 280 g, 285 g, 290 g, 295 g, 300 g, 305 g, 310 g, 315 g, or 320 g or so, and the upper limit thereof may be 1,000 g, 900 g, 800 g, 700 g, 600 g, 500 g, 400 g, 350 g, 345 g, 340 g, 335 g, 330 g, 325 g, 320 g, 315 g, 310 g, 305 g, 300 g, 295 g, 290 g, 280 g, 275 g, 270 g, 265 g, 260 g, 255 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, 100 g, 95 g, 90 g, 85 g, 80 g, 75 g, 70 g, 65 g, 60 g, 55 g, 50 g, 45 g, 40 g, 35 g, or 30 g or so. The solubility may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The solubility is the weight (g) of the ionic compound which is dissolvable at most in 100 g of water at 25°C. The solubility may be evaluated in the manner described in "3. Solubility evaluation" of Example sections in this specification.

The lower limit of solubility of the ionic compound in 100 g of water at 0°C may be 10 g, 15 g, 20 g, 25 g, 30 g, 35 g, 40 g, 45 g, 50 g, 55 g, 60 g, 65 g, 70 g, 75 g, 80 g, 85 g, 90 g, 95 g, 100 g, 110 g, 115 g, 120 g, 125 g, 130 g, 135 g, 140 g, 145 g, 150 g, 155 g, 160 g, 165 g, 170 g, 175 g, 180 g, 185 g, 190 g, 195 g, 200 g, 205 g, 210 g, or 215 g or so, and the upper limit thereof may be 1,000 g, 900 g, 800 g, 700 g, 600 g, 500 g, 400 g, 300 g, 250 g, 245 g, 240 g, 235 g, 230 g, 225 g, 220 g, 215 g, 210 g, 205 g, 200 g, 195 g, 190 g, 185 g, 180 g, 175 g, 170 g, 165 g, 160 g, 155 g, 150 g, 145 g, 140 g, 135 g, 130 g, 125 g, 120 g, 115 g, 110 g, 105 g, 100 g, 95 g, 90 g, 85 g, 80 g, 75 g, 70 g, 65 g, 60 g, 55 g, 50 g, 45 g, 40 g, 35 g, or 30 g or so. The solubility may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The solubility is the weight (g) of the ionic compound which is dissolvable at most in 100 g of water at 0°C. The solubility may be evaluated in the manner described in "3. Solubility evaluation" of Example sections in this specification.

The type of the ionic compound is determined according to the purpose, which is not particularly limited. For example, the ionic compound having a freezing point depression effect may be exemplified by one or more selected from the group consisting of formate, acetate, carbonate, and sulfate. Specifically, for example, one or more of substances consisting of sodium acetate (CH₃COONa), sodium formate (HCOONa), potassium acetate (CH₃COOK), potassium formate (HCOOK), calcium formate ((HCOO)₂Ca), magnesium formate ((HCOO)₂Mg), potassium carbonate (K₂CO₃), and ammonium sulfate ((NH₄)₂SO₄) may be used as the ionic compound.

For example, the lower limit of the part by weight of the ionic compound applied for adjustment of the freezing point relative to 100 parts by weight of the vaporizable substance may be 5 parts by weight, 10 parts by weight, 15 parts by weight, 20 parts by weight, 25 parts by weight, 30 parts by weight, 35 parts by weight, 40 parts by weight, 45 parts by weight, 50 parts by weight, or 55 parts by weight or so, and the upper limit thereof may be 200 parts by weight, 150 parts by weight, 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, or 30 parts by weight or so. The ratio may be within a range of less than or equal to, or less than any upper limit arbitrarily selected from the above-listed upper limits while being more than or equal to, or more than any lower limit arbitrarily selected from the above-listed lower limits.

When another ionic compound (e.g., an ionic compound as a carbonization catalyst, as described below, or an acid or base added to form an inorganic gel, etc.) other than the ionic compound as the freezing point regulator is added to the composite material, all the ionic compounds present in the composite material may be present in an amount such that ΔT_{f} in Equation 4 falls within the predetermined range.

The composite may comprise, as additional components, a carbonization catalyst and a carbonizable organic substance. The combination of these components allows the formation of a carbide of the carbonizable organic substance at a necessary time point (e.g., the abnormal state). The carbonized substance thus formed can block heat transfer. The carbonization catalyst can promote the carbonization process of the carbonizable organic substance, and the like. The carbonization catalyst can form an acid or an acid-based salt or ions, and the like at high temperatures, and such a component can play a role in promoting the carbonization action and the gas generation process. Furthermore, depending on the type of carbonization catalyst, it can impart flame retardancy to the carbide, or form a component exhibiting flame retardancy alone. For example, the carbonization catalyst can form a phosphoric acid-based substance through decomposition at high temperatures, and the like, and such a substance can polymerize to have flame retardancy. Accordingly, the carbonization catalyst can be included in the composite material, thereby enabling so that the composite material can effectively respond to the abnormal state.

The carbonization catalyst and the carbonizable organic substance need to be applied together with the vaporizable substance, where one having solubility above a certain level in the vaporizable substance (e.g., water) must be used as the carbonization catalyst. That is, as the components dispersed within the vaporizable substance more effectively contact and interact with each other at the necessary time point, it is possible to efficiently form the desired carbide, and the like. Furthermore, by adjusting the solubility of the carbonization catalyst in the vaporizable substance, an agglomeration or phase separation phenomenon of the components within the composite material can be prevented, and the formation action of the carbide and/or the formation of the flame retardant as described above can proceed more effectively. For example, the lower limit of the solubility of the carbonization catalyst in the vaporizable substance or water may be 5 g, 10 g, 15 g, 20 g, 25 g, 30 g, 35 g, or 40 g or so, and the upper limit thereof may be 1000 g, 900 g, 800 g, 700 g, 600 g, 500 g, 400 g, 300 g, 200 g, 100 g, 90 g, 80 g, 70 g, 60 g, 50 g, 40 g, or 30 g or so. The solubility may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The solubility is the weight (g) of the carbonization catalyst which is dissolvable at a maximum in 100 g of the solvent (e.g., water) at 25°C. The solubility is measured in the manner described in "3. Solubility evaluation" of Example sections in this specification.

The carbonization catalyst can be used without any special limitation if it can decompose at high temperatures to form an acid or an acid-based salt or ions, and has the above solubility. An example of the carbonization catalyst includes phosphoric acid, phosphoric acid compounds such as phosphates, phosphonate compounds, or phosphate compounds. The carbonization catalyst may be, for example, primary or secondary ammonium phosphate, urea phosphate, guanyl urea phosphate, or ammonium polyphosphate, and the like, and one, or two or more of the foregoing may be selected and used.

The carbonization catalyst may be present in an appropriate amount, considering the intended effect. For example, the lower limit of the weight ratio of the carbonization catalyst relative to 100 parts by weight of the vaporizable substance may be 0.01 parts by weight, 0.05 parts by weight, 0.1 parts by weight, 0.5 parts by weight, 1 part by weight, 1.5 parts by weight, 2 parts by weight, 2.5 parts by weight, 3 parts by weight, 3.5 parts by weight, 4 parts by weight, 5 parts by weight, 5.5 parts by weight, 6 parts by weight, 6.5 parts by weight, 7 parts by weight, 7.5 parts by weight, 8 parts by weight, 10 parts by weight, 20 parts by weight, 30 parts by weight, 40 parts by weight, 50 parts by weight, 100 parts by weight, 150 parts by weight, 200 parts by weight, 250 parts by weight, 300 parts by weight, 350 parts by weight, 400 parts by weight, 450 parts by weight, or 500 parts by weight or so, and the upper limit thereof may be 1,000 parts by weight, 900 parts by weight, 800 parts by weight, 700 parts by weight, 600 parts by weight, 500 parts by weight, 400 parts by weight, 100 parts by weight, 50 parts by weight, 40 parts by weight, 30 parts by weight, 20 parts by weight, 15 parts by weight, 10 parts by weight, or 5 parts by weight or so. The ratio may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. If the content of the carbonization catalyst is excessively high, the content of the vaporizable substance applicable to the composite material is limited, and the vaporization characteristics of the vaporizable substance are affected by the carbonization catalyst, whereby it may be difficult to secure the desired characteristics, so that in consideration of this, the amount of the carbonization catalyst may be adjusted.

The carbonizable organic substance is an organic substance carbonizing to form a carbide when exposed to a flame or heat at a predetermined temperature. The carbide formed by such an organic substance is often porous, and accordingly, it may have an insulation function. Therefore, when the composite material or the like has been exposed to abnormal heat generation, ignition, or explosion, the organic substance can exhibit the insulation function by forming an appropriate carbide. As described above, by adding the specific carbonization catalyst and the carbonizable organic substance into the vaporizable substance, it is possible to form a carbide capable of effectively responding to abnormal heat generation, ignition, and/or explosion even when applying a small amount of the carbonizable organic substance.

As the organic material, any appropriate type may be applied without special limitation if it is a material forming the carbide when exposed to heat or flame.

An example of such an organic material may be exemplified by sugars such as sorbitol or mannitol, polysaccharides such as starch or dextrin (e.g., MC (maleated cyclodextrin) or metal salts of the MC), polyhydric alcohols such as pentaerythritol, dipentaerythritol, tripentaerythritol or THEIC (tris(hydroxyethyl)isocyanurate), celluloses, BSPPO (bi(4-methoxy-1-phospha-2,6,7-trioxabicyclo[2.2.2]-octan-1-sulfide)phenyl phosphate), lignin (alkali lignin or urea modified lignin), melamine compounds such as methylol melamine, phenol-formaldehyde resins and/or carbonizable polymer (char forming polymer) such as PA6T (poly-hexa methylene terephthalamide), and the like, but is not limited thereto.

A substance representatively applicable as the carbonizable organic material is starch. The starch is relatively easy to obtain, which may form the appropriate carbide when exposed to heat or flame.

In order that the carbide is efficiently formed and the formed carbide effectively exerts the desired fire-extinguishing or insulating effect, the type of starch may be adjusted.

For example, as the starch, starch containing amylose and amylopectin, the ratio of which is adjusted to an appropriate level, may be used. As is known, amylopectin and amylose are types of polysaccharides mainly found in plants, and the starch of polysaccharides is composed of amylose and amylopectin. The amylose is composed of glucose molecules linked by α (1→4) glycosidic bonds and has a linear chain structure, whereas the amylopectin has relatively short and highly branched chains. The amylose crystallizes relatively easily compared to the amylopectin, and the amylopectin has a relatively higher solubility in water than the amylose.

The desired composite material can be provided more efficiently by using starch that amylose and amylopectin having the characteristics are present in an appropriate ratio.

For example, in the starch containing amylose and amylopectin, the lower limit of the weight ratio of the amylopectin relative to 100 parts by weight of the amylose may be 150 parts by weight, 200 parts by weight, 250 parts by weight, or 300 parts by weight or so, and the upper limit thereof may be 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, or 300 parts by weight or so. The ratio may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The ratio of amylose and amylopectin can be measured according to a manner described in "4. Measurement of amylopectin and amylose contents" of Example sections in this specification.

As the starch, starch having a molecular weight, for example, a weight average molecular weight (Mw), within a predetermined range may be used. For example, the lower limit of the weight average molecular weight of the starch may be 200,000, 250,000, 300,000, 350,000, 400,000, 450,000, 500,000, 550,000, 600,000, 650,000, 700,000, 750,000, 800,000, 850,000, 900,000, 950,000, 1,000,000, 1,500,000, 2,000,000, 2,500,000, 3,000,000, 3,500,000, 4,000,000, 4,500,000, 5,000,000, 5,500,000, 6,000,000, 6,500,000, 7,000,000, 7,500,000, 8,000,000, 8,500,000, 9,000,000, 9,500,000, 10,000,000, 20,000,000, 30,000,000, 40,000,000, or 50,000,000 or so, and the upper limit thereof may be 1,000,000,000, 900,000,000, 800,000,000, 700,000,000, 600,000,000, 500,000,000, 400,000,000, 300,000,000, 200,000,000, 150,000,000, 100,000,000, 90,000,000, 80,000,000, 70,000,000, or 60,000,000 or so. The unit of the molecular weight is g/mol. The molecular weight may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits. The starch having the molecular weight (Mw) can more effectively form carbides having a desired function (for example, an insulating function) when exposed to heat or flame. The molecular weight can be measured according to the method described in "5. Molecular weight measurement" of Example sections in this specification.

As the carbonizable organic material (for example, starch), one having a gelatinization viscosity within a certain range may be used. Such a gelatinization viscosity is related to the characteristics of the carbonizable organic material when present in a vaporizable substance, where the carbide can be formed more effectively through control of the gelatinization viscosity. The lower limit of the gelatinization viscosity of the carbonizable organic material (for example, starch) may be 150, 200, 250, 300, 350, 400, 450, 500, 550, 650, 700, 750, 800, 850, 900, 950, or 1,000 or so, and the upper limit thereof may be 5,000, 4,500, 4,000, 3,500, 3,000, 2,500, 2,000, 1,500, 1,000, 950, 900, 850, 800, 750, 700, 650, 600, 550, 500, 450, 400, 350, or 300 or so. The gelatinization viscosity may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits. The unit of the gelatinization viscosity is BU (Brabender unit).

The lower limit of the weight ratio of the carbonizable organic substance to 100 parts by weight of the vaporizable substance may be 0.001 parts by weight, 0.005 parts by weight, 0.01 parts by weight, 0.05 parts by weight, 0.1 parts by weight, 0.5 parts by weight, 1 part by weight, 1.5 parts by weight, 2 parts by weight, 2.5 parts by weight, 3 parts by weight, 3.5 parts by weight, 4 parts by weight, 4.5 parts by weight, 5 parts by weight, 5.5 parts by weight, or 6 parts by weight or so, and the upper limit thereof may be 50 parts by weight, 45 parts by weight, 40 parts by weight, 35 parts by weight, 30 parts by weight, 25 parts by weight, 20 parts by weight, 15 parts by weight, 10 parts by weight, 5 parts by weight, 4, parts by weight, 3 parts by weight, 2 parts by weight, or 1 part by weight or so. The ratio may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits. The carbonizable organic substance included in such a ratio enables the composite material to effectively form carbides when necessary and to have excellent handleability and storage stability in whole.

The composite material may comprise a water-absorbing polymer as an optional additional ingredient. The water-absorbing polymer is a polymer having a property capable of absorbing water.

In one example, the water-absorbing polymer may be a so-called hydrogel polymer or hydrogel, which is generally defined as a crosslinked hydrophilic polymer. Such a polymer is also known as an SAP (Super Adsorbent Polymer).

The water-absorbing polymer is a material that can absorb moisture tens to thousands of times its own weight. Such a material allows the composite material to exist in a gel state in whole, thereby performing the function of ensuring handleability and storage stability.

The type of water-absorbing polymer is not particularly limited, and any polymer which is generally applicable as the SAP may be used without limitation.

Typically, a polyacrylate-based vinyl polymer is used as the material. The polyacrylate-based polymer is a polymer manufactured from an acrylate-based monomer, and if necessary, other comonomers may be further used to form the polymer.

In one example, the water-absorbing polymer may be a particulate polymer. The weight-based size distribution of the particulate water-absorbing polymer may be controlled to secure the desired viscosity properties and fire extinguishing function through the application of the water-absorbing polymer. In this specification, the term weight-based size distribution of the water-absorbing polymer is a size distribution measured according to EDANA method WSP 220.3 standard, which means a size distribution, in which a sample of the particulate water-absorbing polymer is divided into a fraction with a size of less than 150µm (hereinafter, may be referred to as "A fraction"), a fraction within a range of 150 µm to 300 µm (hereinafter, may be referred to as "B fraction"), a fraction within a range of 300 µm to 600 µm (hereinafter, may be referred to as "C fraction"), a fraction within a range of 600 µm to 850 µm (hereinafter, may be referred to as "D fraction"), and a fraction exceeding 850 µm (hereinafter, may be referred to as "E fraction"), and each fraction weight is expressed as a percentage (weight ratio of each fraction) relative to the weight of the entire particulate water-absorbing polymer sample.

The particulate water-absorbing polymer may have a maximum weight size in a range of 150µm to 850µm in the weight-based size distribution. Here, the maximum weight size is the size of the fraction showing the highest weight ratio among the weight ratio of the A fraction, the weight ratio of the B fraction, the weight ratio of the C fraction, the weight ratio of the D fraction, and the weight ratio of the E fraction. That is, the matter that the maximum weight size is in the range of 150µm to 850µm means that the weight ratio of the particulate water-absorbing polymer belonging to any one or two or more of the B fraction, C fraction, and D fraction shows the largest value. Since the respective weight ratios of two fractions are the same and the weight ratio thereof may also represent the highest value among the respective weight ratios of the total fractions, the fraction with the maximum weight size may also be one or two or more. In one example, the fraction with the largest weight size may be the C fraction among the B, C, and D fractions. Therefore, the maximum weight size in the weight-based size distribution may also be in the range of 300µm to 600µm.

The lower limit of the weight ratio in the fraction representing the maximum weight size in the weight-based size distribution of the particulate water-absorbing polymer (i.e., the weight ratio of the water-absorbing polymer belonging to the maximum weight size in the weight-based size distribution) may be 35 weight%, 40 weight%, 45 weight%, 50 weight%, 55 weight%, 60 weight%, 65 weight%, 70 weight%, 71 weight%, 72 weight%, 73 weight%, or 74 weight% or so, and the upper limit thereof may be 95 weight%, 90 weight%, 85 weight%, 80 weight%, 79 weight%, 78 weight%, 77 weight%, 76 weight%, or 75 weight% or so. The weight ratio may be within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits.

If the maximum weight size is too small and/or the weight ratio in the fraction representing the maximum weight size is too small, the composite material does not properly form the desired gel, whereby handling and storage properties may be lowered, or it may not exert a fire extinguishing function, so that an appropriate particulate water-absorbing polymer may be selected in consideration of this matter.

When included, the lower limit of the weight ratio of the water-absorbing polymer relative to 100 parts by weight of the vaporizable substance may be 0.01 parts by weight, 0.5 parts by weight, 1 part by weight, 2 parts by weight, 3 parts by weight, 4 parts by weight, 5 parts by weight, 6 parts by weight, 7 parts by weight, 8 parts by weight, or 9 parts by weight or so, and the upper limit thereof may be 50 parts by weight, 45 parts by weight, 40 parts by weight, 35 parts by weight, 30 parts by weight, 29 parts by weight, 28 parts by weight, 27 parts by weight, 26 parts by weight, 25 parts by weight, 24 parts by weight, 23 parts by weight, 22 parts by weight, 21 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, 5 parts by weight, 4 parts by weight, 3 parts by weight, or 2 parts by weight or so. The ratio may be within a range of less than or equal to, or less than any upper limit arbitrarily selected from the above-listed upper limits; or within a range of more than or equal to, or more than any lower limit arbitrarily selected from the above-listed lower limits; or within a range of less than or equal to any upper limit arbitrarily selected from the above-listed upper limits while being more than or equal to, or more than any lower limit arbitrarily selected from the above-listed lower limits.

The sealed space or composite material of the inside of the fire-extinguishing device comprises the above components, which may comprise additional components, if necessary.

The present specification discloses a method for producing the composite material.

For example, the method may comprise a step of polymerizing a precursor solution comprising the inorganic gel precursor and the vaporizable substance.

The polymerization is a process in which relatively low-molecular-weight substances, such as monomers or oligomers, form a network and simultaneously form high-molecular-weight components. In this case, the monomer or oligomer may be the precursor. Furthermore, the specific method, in which the polymerization is performed, is not particularly limited. For example, when the inorganic gel precursor is a condensable precursor to be described below, the polymerization process may be a so-called sol-gel process.

For example, a metal alkoxide may be used as the precursor. Such a precursor is a condensable precursor, which may form an inorganic gel through the sol-gel process. The metal alkoxide may be exemplified by, specifically, an alkoxide of one or more selected from the group consisting of silicon, titanium, zirconium, niobium, tantalum, molybdenum, and tungsten. The lower limit of the carbon number present in the alkoxide may be 4, 6, 8, or 10 or so, and the upper limit thereof may be 20, 18, 16, 14, 12, 10, or 8 or so. The carbon number may be within a range of less than or equal to any upper limit arbitrarily selected from the above-listed upper limits while being more than or equal to, or more than any lower limit arbitrarily selected from the above-listed lower limits. For example, a component called liquid glass (sodium silicate) may also be used as the precursor, and such a component may form a silica gel as an inorganic gel.

As the vaporizable substance, the above-described component, such as water, may be used.

For formation of the desired inorganic gel and composite material, the composition of the precursor solution may be adjusted.

For example, the content of the vaporizable substance in the precursor solution may be adjusted. For example, the lower limit of the content of the vaporizable substance in the precursor solution may be 30 weight%, 40 weight%, 50 weight%, 60 weight%, or 65 weight% or so, and the upper limit thereof may be 95 weight%, 90 weight%, 85 weight%, 80 weight%, 75 weight%, 70 weight%, 65 weight%, or 60 weight% or so. The content may be within a range of less than or equal to, or less than any upper limit arbitrarily selected from the above-listed upper limits while being more than or equal to, or more than any lower limit arbitrarily selected from the above-listed lower limits.

The lower limit of the weight ratio of the precursor relative to 100 parts by weight of the vaporizable substance in the precursor solution may be 0.001 parts by weight, 0.005 parts by weight, 0.01 parts by weight, 0.05 parts by weight, 0.1 parts by weight, 0.15 parts by weight, 0.2 parts by weight, 0.25 parts by weight, 0.3 parts by weight, 0.4 parts by weight, 0.5 parts by weight, 1 part by weight, 3 parts by weight, 5 parts by weight, 10 parts by weight, 15 parts by weight, or 20 parts by weight or so, and the upper limit thereof may be 25 parts by weight, 20 parts by weight, 15 parts by weight, 10 parts by weight, 5 parts by weight, 4 parts by weight, 3 parts by weight, 2 parts by weight, 1 part by weight, or 0.5 parts by weight or so. The content may be within a range of less than or equal to, or less than any upper limit arbitrarily selected from the above-listed upper limits while being more than or equal to, or more than any lower limit arbitrarily selected from the above-listed lower limits.

The precursor solution may be formulated to exhibit a pH in a predetermined range. For example, the lower limit of the pH of the precursor solution may be 3, 3.5, 4, 4.5, 5, 5.5, 6, 6.5, or 7 or so, and the upper limit thereof may be 14, 13, 12, 11, 10, 9, 8, or 7 or so. The pH may be within a range of less than or equal to, or less than any upper limit arbitrarily selected from the above-listed upper limits while being more than or equal to, or more than any lower limit arbitrarily selected from the above-listed lower limits.

For adjustment of the pH, the precursor solution may further comprise a catalyst. Such a catalyst may be one of the ionic compounds as described above. The type of applicable catalyst is not particularly limited, and for example, an acid catalyst or a base catalyst applicable to general sol-gel processes may be used. An example of such an acid catalyst may be exemplified by one or a mixture of two or more selected from hydrochloric acid, sulfuric acid, fluorosulfuric acid, nitric acid, phosphoric acid, acetic acid, hexafluorophosphoric acid, p-toluenesulfonic acid, and trifluoromethanesulfonic acid, and the like, and an example of the base catalyst includes an alkaline catalyst such as sodium hydroxide, ammonium hydroxide, or ammonium chloride, and the like, without being limited thereto.

The content of the catalyst may be controlled within a range that the above-described pH is achievable. For example, the lower limit of the molal concentration of the catalyst (i.e., the mole number of catalyst present per 1kg of the vaporizable substance) based on the vaporizable substance in the precursor solution may be 0.05, 0.1, 0.15, 0.2, 0.25, 0.3, 0.5, 1, or 1.5 or so, and the upper limit thereof may be 5, 4.5, 4, 3.5, 3, 2.5, 2, 1.5, 1, 0.8, 0.6, or 0.4 or so. The molal concentration may be within a range of less than or equal to, or less than any upper limit arbitrarily selected from the above-listed upper limits while being more than or equal to, or more than any lower limit arbitrarily selected from the above-listed lower limits.

The precursor solution may further comprise an ionic compound in addition to the catalyst. Such an ionic compound can be added to allow for forming the desired inorganic gel by adjusting the molecular energy or intermolecular attractive force of the vaporizable substance, as described above. The ionic compound may be exemplified by the freezing point regulator or carbonization catalyst, and the like as described above.

The contents of all ionic compounds, including the catalyst, present in the precursor solution may be adjusted. This content adjustment controls fluidity of the vaporizable substance, and the fluidity thus controlled affects the polymerization efficiency of the precursor, whereby the desired inorganic gel can be formed at a specified polymerization temperature.

For example, the ionic compound may be added so that ΔT_{f} in Equation 4 as described above falls within the predetermined range as described above.

The precursor solution may comprise any other necessary components in addition to the components. For example, the polymerization may be performed in the presence of the inorganic fibers. The inorganic fibers also affect the polymerization efficiency of the precursor. In this case, the precursor solution may comprise the above-described inorganic fibers.

The lower limit of the weight ratio of the inorganic fibers relative to 100 parts by weight of the vaporizable substance in the precursor solution may be 0.5 parts by weight, 1 part by weight, 5 parts by weight, 7 parts by weight, 7.5 parts by weight, 8 parts by weight, 8.5 parts by weight, 10 parts by weight, 15 parts by weight, 20 parts by weight, 30 parts by weight, 35 parts by weight, 40 parts by weight, 50 parts by weight, 60 parts by weight, 70 parts by weight, or 75 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, or 20 parts by weight or so. The weight ratio may be within a range of less than or equal to, or less than any upper limit arbitrarily selected from the above-listed upper limits while being more than or equal to, or more than any lower limit arbitrarily selected from the above-listed lower limits.

The temperature for polymerizing the precursor solution may be controlled. The temperature thus controlled contributes to the formation of the inorganic gel with the desired shape in conjunction with the ionic compound having the ΔT_{f} value.

For example, the lower limit of the polymerization temperature may be 10°C, 15°C, 20°C, 25°C, 30°C, or 35°C or so, and the upper limit thereof may be 50°C, 45°C, 40°C, 35°C, 30°C, or 25°C or so. The polymerization temperature may be within a range of less than or equal to, or less than any upper limit arbitrarily selected from the above-listed upper limits while being more than or equal to, or more than any lower limit arbitrarily selected from the above-listed lower limits.

For formation of the desired composite material, the polymerization of the precursor or a prepolymer of the precursor may be performed in the presence of inorganic fibers. To this end, the polymerization may be performed in multiple steps. For example, the manufacturing method may comprise a first step (primary polymerization) of polymerizing the precursor solution to obtain a prepolymer, and a second step (secondary polymerization) of polymerizing the precursor or prepolymer in the presence of the inorganic fibers to obtain an inorganic gel. The precursor solution applied to the primary polymerization may not comprise the inorganic fibers. That is, the primary polymerization may be performed in the absence of inorganic fibers, and the second polymerization of the second step may be performed in the presence of inorganic fibers. That is, after the primary polymerization, a polymeric substance may be mixed with the inorganic fibers, and further polymerization may proceed. The precursor of the second step may mean a precursor that has participated in the polymerization upon the primary polymerization to form no prepolymer.

The primary polymeric substance or prepolymer may be, for example, an inorganic sol.

The polymerization temperature, polymerization time, and/or mixing conditions, and the like of the first step may be adjusted.

The lower limit of the polymerization temperature of the first step may be 10°C, 15°C, 20°C, 25°C, 30°C, or 35°C or so, and the upper limit thereof may be 50°C, 45°C, 40°C, 35°C, 30°C, or 25°C or so. The polymerization temperature may be within a range of less than or equal to, or less than any upper limit arbitrarily selected from the above-listed upper limits while being more than or equal to, or more than any lower limit arbitrarily selected from the above-listed lower limits.

The first step may be performed while stirring the precursor solution at an appropriate speed. In this process, the lower limit of the stirring speed may be 100 rpm, 150 rpm, 200 rpm, 250 rpm, 300 rpm, 350 rpm, 400 rpm, 450 rpm, or 500 rpm or so, and the upper limit thereof may be 2,000 rpm, 1,500 rpm, 1,000 rpm, 800 rpm, 600 rpm, 400 rpm, or 300 rpm or so. The stirring speed may be within a range of less than or equal to, or less than any upper limit arbitrarily selected from the above-listed upper limits while being more than or equal to, or more than any lower limit arbitrarily selected from the above-listed lower limits.

The lower limit of the time for performing the primary polymerization may be 1 second, 5 seconds, 10 seconds, 30 seconds, 1 minute, 5 minutes, 10 minutes, or 15 minutes or so, and the upper limit thereof may be 60 minutes, 55 minutes, 50 minutes, 45 minutes, 40 minutes, 35 minutes, 30 minutes, 25 minutes, 20 minutes, 15 minutes, 10 minutes, 8 minutes, 6 minutes, 4 minutes, 2 minutes, 1 minute, or 30 seconds or so. The time may be within a range of less than or equal to, or less than any upper limit arbitrarily selected from the above-listed upper limits while being more than or equal to, or more than any lower limit arbitrarily selected from the above-listed lower limits.

By forming the primary polymeric substance (prepolymer or mixture of prepolymer and precursor) under the above conditions, and performing the secondary polymerization, it is possible to form the desired composite material.

By secondarily polymerizing the primary polymeric substance further, it is possible to form an inorganic gel. As described above, the secondary polymerization may be performed in the presence of the inorganic fibers. That is, after the primary polymerization, by mixing the inorganic fibers and the primary polymeric substance are mixed to meet the above-described ratio (ratio of inorganic fibers relative to 100 parts by weight of the vaporizable substance), and then further performing the polymerization, it is possible to effectively form the desired inorganic gel.

The secondary polymerization may be performed at an appropriate temperature.

For example, the lower limit of the polymerization temperature may be 10°C, 15°C, 20°C, or 25°C or so, and the upper limit thereof may be 40°C, 35°C, 30°C, or 25°C or so. The temperature may be within a range of less than or equal to, or less than any upper limit arbitrarily selected from the above-listed upper limits while being more than or equal to, or more than any lower limit arbitrarily selected from the above-listed lower limits.

By maintaining the mixture of the primary polymeric substance and the inorganic fibers at the above temperature upon the secondary polymerization, it is possible to obtain the desired inorganic gel.

The composite material may be produced by mixing the inorganic gel formed in this manner with other necessary components of the composite material. After the inorganic gel is produced, the components may be mixed with the inorganic gel, or mixed into the precursor solution prior to the producing process of the inorganic gel, or performed at an appropriate point during the producing process of the inorganic gel.

By producing the composite material and then placing the same in a case, it is possible to form a fire-extinguishing device. The composite material may be produced and then placed in the case, and by performing all or a part of the composite material manufacturing processes within the case, it is also possible to form a fire-extinguishing device. For example, by placing the inorganic fibers in the case in advance, injecting the primary polymeric substance, and then performing additional polymerization, and further introducing additional components after the polymerization, if necessary, it is also possible to simultaneously manufacture the fire-extinguishing device and the composite material.

The present specification also discloses electronic equipment or devices to which the fire-extinguishing device is applied.

The type of electronic equipment or device is not particularly limited. For example, the composite material or fire-extinguishing device may be applied to equipment or devices, and the like, where there is a risk of abnormal heat generation, ignition and/or explosion in driving, maintenance and/or storage processes, and the relevant abnormal phenomenon must be controlled.

An example of the equipment or device representatively includes a battery. Particularly, in a battery module constructed using a plurality of battery cells, it is important to prevent abnormal heat generation, ignition and/or explosion occurring in one battery cell from spreading to other adjacent battery cells.

The present specification discloses a battery module comprising the fire-extinguishing device.

Such a battery module may basically comprise a plurality of battery cells; and the fire-extinguishing device disposed between the battery cells.

If the fire-extinguishing device is applied, the specific configuration of the battery module, for example, the type of battery cell, and the like, is not particularly limited, and known materials may be applied. For example, a known pouch-shaped, rectangle-shaped, or cylindrical battery cell may be used as the battery cell.

The manufacturing method of the battery module is not particularly limited, and for example, as described above, a method of manufacturing a fire-extinguishing device as in the form of a battery cell, and then placing the fire-extinguishing device at a required position during the manufacturing process of the battery module, and the like may be used.

### Advantageous Effects

The present specification discloses a composite material and a fire-extinguishing device, which are applied to products or elements being in an abnormal state or having potential for an abnormal state, thereby enabling to effectively respond to the abnormal state. For example, the composite material or the like can be applied to an article comprising multiple products or elements to respond to abnormal heat generation, explosion, or ignition occurring in one element or product, and prevent or minimize the spread of such heat generation, explosion, or ignition to adjacent elements or products. The composite material or the like also exhibits excellent handleability and storage stability. The present specification can also provide a use of the composite material or the like.

### Description of Drawings

Figure 1 is an exemplary cross-sectional diagram of a battery module to which a fire-extinguishing device is applied.
Figure 2 is an exemplary diagram for explaining an operating principle of a fire-extinguishing device.
Figure 3 is an exemplary diagram for explaining an operating principle of a fire-extinguishing device.
Figure 4 is a diagram for explaining a content of forming a fire-extinguishing device in an example.

### Mode for Invention

Hereinafter, the composite material and the like will be described in detail through examples and comparative examples, but the scope of the composite material and the like is not limited by the following examples.

### 1. WVTR (Water Vapor Transmission Rate) evaluation

A WVTR of a case is evaluated according to ASTM F1249 standard under conditions of 38°C and 100% relative humidity.

### 2. Thermal conductivity evaluation

A thermal conductivity is evaluated using Hot Disk's TPS2200 equipment in accordance with ISO 22007-2 standard.

### 3. Solubility evaluation

Solubility is evaluated based on ASTM E1148-02 standard. The maximum amount of the sample dissolved in 100 g of water at a measurement temperature (0°C or room temperature (25°C)) is evaluated according to the standard to identify solubility.

### 4. Measurement of amylopectin and amylose contents

Contents of amylopectin and amylose in starch were evaluated according to the method described in a paper (Potato Research 31 (1988) 241-246). First, a sample was prepared by dissolving about 5 mg of starch in about 1 mL of sterile water (Step 1), and heated to 95°C for about 15 minutes in a constant temperature water bath (Step 2). Subsequently, about 20 µl of the sample was placed in a cuvette (Step 3), and about 980µl of an iodine solution was added thereto and mixed (Step 4). Subsequently, absorbance of the sample mixed with the iodine solution at wavelengths of 525 nm and 700 nm was measured and recorded, respectively (Step 5). The absorbance was measured using KLAB's OPTIZEN POP model. About 20 µl of water was placed in another cuvette, 980 µl of the iodine solution was added thereto, and mixed (Step 6). For the solution of Step 6, absorbance at wavelengths of 525 nm and 700 nm was measured and recorded, respectively, in the same manner as in Step 5 (Step 7). The absorbance obtained in Step 7 was subtracted from the absorbance obtained in Step 5, and the ratio (%) of amylose was confirmed according to Equation C below (Step 8). [Equation C] $PA = 3.039 - U / L - 19.192$

In Equation C, PA is the ratio (%) of amylose, U is determined by Equation D below, and L is determined by Equation E below. [Equation D] $U = 7.154 \times {OD}_{700} / {OD}_{525}$ [Equation E] $L = 3.048 \times {OD}_{700} / {OD}_{525}$

In Equations D and E, OD₇₀₀ is the value obtained by subtracting the absorbance at a wavelength of 700 nm measured in Step 7 from the absorbance at a wavelength of 700 nm measured in Step 5, and OD₅₂₅ is the value obtained by subtracting the absorbance at a wavelength of 525 nm measured in Step 7 from the absorbance at a wavelength of 525 nm measured in Step 5.

### 5. Molecular weight measurement

A molecular weight of starch was evaluated in the following manner.

### (1) Preparation of mobile phase

A mobile phase A was prepared by filtering 1000 mL of a 150 mM NaNO₃ aqueous solution containing 0.02 weight% of NaN₃ using a solvent clarification system (Millipore Millisolve Kit, MilliporeSigma).

### (2) Preparation of sample solution

A sample intended to be measured was collected in an amount of 25 mg, and mixed with 5 mL of a 150 mM NaNO₃ aqueous solution containing NaN₃ in an amount of 0.02 weight% and then a sample solution was prepared by heating the mixture at 80°C for 20 hours, and then filtering it with a 0.4µm Nylon Syringe Filter.

### (3) GPC (Gel Permeation Chromatography)/MALS (Multi-Anglue Light Scattering Detection) conditions

The molecular weight was evaluated using the sample solution and the mobile phase A in the following manner.
Measuring instrument: Agilent GPC (Agilent 1200 series, U.S.)
Stationary phase: connecting Shodex OH-Pak 804 column and Shodex OH-Pak 80 column
Mobile phase: A; 0.02% NaN₃, 150 mM NaNO₃ aqueous solution = 100 (v/v %)
Flow rate: 0.4 mL/min
Stationary phase temperature: 25°C
Injected amount: 100 µl (0.45 µm filtered)
Analysis time: 120 minutes

### 6. Thickness measurement

A thickness of a composite material was evaluated using TESA's µ-HITE equipment. A flat-face probe with a diameter of about 5 mm or so was used as a probe type, and the thickness was measured with a force of about 0.63 N or so in a single probing mode.

In a state where the specimen was placed flatly on the equipment, thicknesses were measured at three points of the specimen, an arithmetic mean of the measured thicknesses was obtained, and the obtained arithmetic mean value was designated as the thickness. The specimen was cut to a size in which a width and a length were each 10 cm, and applied, and such a specimen was trisected into three sections where a width and a length were each 3 cm and 10 cm, and the thicknesses were measured at the centers of the respective sections. For each specimen, the thickness was measured before and after high-temperature exposure. Here, in the case of inorganic fibers (ceramic fiber wool), the thickness before high-temperature exposure is the thickness of the inorganic fibers applied to the manufacturing of the composite material, and in the case of the composite material, it is the thickness measured immediately after manufacturing the composite material. Furthermore, the thickness after high-temperature exposure is the thickness measured by the above method within 1 minute after each specimen is placed in a convection oven (made by Jeio Tech, width × length × height = 550mm × 376mm × 710mm) preheated to a predetermined temperature for 1 hour and then taken out. The preheating temperature of the convection oven was set to a temperature (150°C) 50°C higher than the boiling point of water, which was a vaporizable substance in Examples or Comparative Examples, under 1 atm.

### 7. Convection test

Composite materials manufactured in Examples or Comparative Example were each loaded into an aluminum dish with a bottom thickness of about 0.2 mm or so. The aluminum dish was placed on a temperature sensor (k-type thermocoupler). Subsequently, a flame was applied vertically at a height apart about 1 inch or so from the composite material loaded on the dish. The flame was applied using butane gas (can type butane gas with a capacity of 220 g (unused product)) and a torch. The temperature was measured with the temperature sensor while applying the flame for 3 minutes or so, and it was evaluated according to the following criteria.

### <Evaluation criteria>

PASS: When the temperature sensor's measurement temperature remains less than 250°C
NG: When a temperature above 250°C is measured from the temperature sensor, or it is observed for the aluminum dish to be melted

### 8. Chain ignition test

Rectangular batteries were disposed side by side with an interval of about 3 mm, and a fire-extinguishing device comprising a composition was placed therebetween. As the rectangular battery, CATL's product (120 Ah, 3.2 V, size = thickness × breadth × depth = 48 × 174 × 165) was used, and applied to the test in a 100% charged state. In the above arrangement, battery ignition was induced in one rectangular battery according to SAE J2464:2009 standard, and chain ignition in the other rectangular battery was checked. The ignition of the battery was caused by penetrating a nail with a diameter of about 5 mm into the rectangular battery at a speed of 25 mm/sec (Nail Penetration method).

### <Evaluation criteria>

PASS: When no ignition occurs in the other rectangular battery cell other than the rectangular battery cell through which the nail has penetrated
NG: When ignition occurs in the other rectangular battery cell other than the rectangular battery cell through which the nail has penetrated

### Example 1.

### Preparation of composite material

A mixture was prepared, and a silica sol was prepared, by mixing distilled water, liquid sodium silicate, a hydrochloric acid aqueous solution (hydrochloric acid concentration: about 33 weight%), monobasic ammonium phosphate (NH₄H₂PO₄), potassium acetate, and starch.

As the starch, corn starch with a weight-average molecular weight of about 51,000,000 g/mol and a weight ratio (amylose: amylopectin) of amylose to amylopectin of about 25:75 or so was used.

As the liquid sodium silicate, Youngil Chemical Co., Ltd.'s No. 3 (KS) (3 KS) (Na₂O content: about 9 to 10 weight%, SiO₂ content: about 28 to 30 weight%, sodium silicate molar ratio (= 1.032 (SiO₂ weight)/(Na₂O weight)): about 3.1 to 3.3) was used.

The monobasic ammonium phosphate (N)(NH₄H₂PO₄) has solubility in water at 25°C of about 29 g or so.

The potassium acetate has solubility in 100 g of water at 0°C of about 216 g or so, and solubility in 100 g of water at 25°C of about 268.6 g or so.

The mixing was performed such that the distilled water (W), SiO₂ (S) in the liquid sodium silicate, the hydrochloric acid aqueous solution (A), the monobasic ammonium phosphate (N), the potassium acetate (K), and the starch (T) had a weight ratio (W: S: A: N: K: T) of about 64:3:2.6:6.5:25.5:0.5 or so.

The pH of the mixture was about 5 to 7 or so.

In the mixture, the molal concentration of the hydrochloric acid was about 0.38 or so, the molal concentration of the monobasic ammonium phosphate was about 0.86 or so, and the molal concentration of the potassium acetate was about 3.96 or so, based on distilled water.

In the mixture, the ΔT_{f} of Equation 4 below by the hydrochloric acid was about 1.41 or so, the ΔT_{f} of Equation 4 below by the monobasic ammonium phosphate was about 3.20 or so, and the ΔT_{f} of Equation 4 below by the potassium acetate was about 14.71 or so. [Equation 4] ${ΔT}_{f} = {K}_{f} \times M \times I$

In Equation 4, K_{f} is the freezing point depression constant of the distilled water, which is about 1.86 K/m, M is the molal concentration of each ionic compound, and I is the mole number of ions generated when 1 mole of the ionic compound has been completely dissociated. The silica sol was prepared by stirring the mixture at room temperature (about 23°C) at a speed of about 500 rpm for about 15 minutes.

Ceramic fiber wool (Morgan, EST-D PAPER, thickness: 3mm) was placed on the conveyor belt of a gel casting device, and the silica sol was impregnated into the ceramic fiber wool using a spike roller. Subsequently, while moving the conveyor belt, gelation was performed at room temperature (about 25°C) to form a silica gel, thereby manufacturing a composite material. Upon the manufacture of the composite material, the ratio (S: C) of the weight (S) of the silica gel and the weight (C) of the ceramic fiber wool was set to about 5:20 or so. In the composite material, the water content was about 56.1 weight% or so, the inorganic gel (silica gel) content was about 2.63 weight% or so, and the inorganic fiber (ceramic fiber wool) content was about 10.52 weight% or so.

The ceramic fiber wool had a tensile strength of about 0.1 MPa or so, a compressive strength of about 150 kPa or so, a Young's modulus of about 3 MPa or so, a density of about 2 g/cm³ or so, and a softening point of about 800°C or so. The tensile strength, compressive strength, and Young's modulus can be measured according to KS K ISO 9073-3 standard. The ceramic fiber wool is cut to have a width of about 50 mm and a length of about 200 mm, and mounted on a UTM (Universal Testing Machine), and a stress-strain curve is obtained while the wool is stretched lengthwise at a speed of about 100 mm/min in the longitudinal direction, whereby based on this curve, the tensile strength, compressive strength, and Young's modulus can be measured.

### Manufacturing of fire-extinguishing device

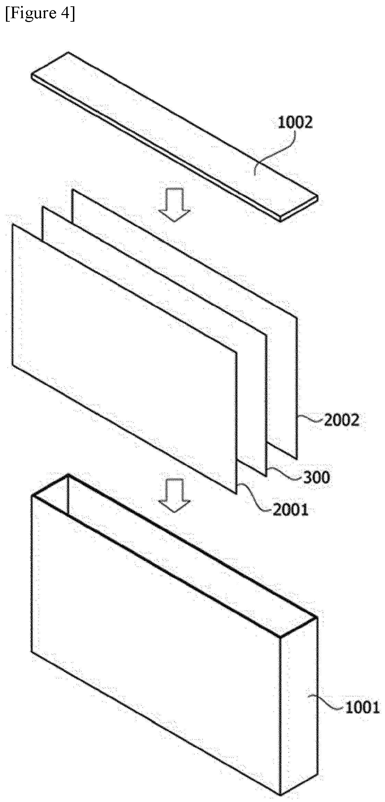

The composite material was placed inside an aluminum can (case) used in the manufacture of rectangular batteries, and the opening was sealed to manufacture a fire-extinguishing device. The aluminum can had a WVTR of about 0 g/m²·day or so. As shown in Figure 4, a laminate of a thermally conductive layer (2001), the composite material (300), and a thermally conductive layer (2002) was inserted into the inside of the aluminum can (1001), and a cover (1002) was covered to manufacture a fire-extinguishing device. Here, a copper film (thickness of about 15µm) having a thermal conductivity of about 401 W/m·K was used as the thermally conductive layers (2001, 2002).

### Example 2.

### Preparation of composite material

A mixture was prepared, and a silica sol was prepared, by mixing distilled water, liquid sodium silicate, an NaOH aqueous solution (NaOH concentration: about 33 weight%), an acetic acid aqueous solution (acetic acid concentration: about 99 weight%), monobasic ammonium phosphate (NH₄H₂PO₄), potassium acetate, and starch.

As the starch and liquid sodium silicate, the same materials as in Example 1 were used.

The mixing was performed such that the distilled water (W), SiO₂ (S) in the liquid sodium silicate, the NaOH aqueous solution (B), the acetic acid aqueous solution (A), the monobasic ammonium phosphate (N), the potassium acetate (K), and the starch (T) had a weight ratio (W: S: B: A: N: K: T) of about 62.5:3.5:0.1:1:3.5:31:0.5 or so.

The pH of the mixture was about 6 to 8 or so.

In the mixture, the molal concentration of the NaOH was about 0.01 or so, the molal concentration of the acetic acid was about 0.26 or so, the molal concentration of the monobasic ammonium phosphate was about 0.49 or so, and the molal concentration of the potassium acetate was about 5.05 or so, based on distilled water.

In the mixture, the ΔT_{f} of Equation 4 above by the NaOH was about 0.05 or so, the ΔT_{f} of Equation 4 above by the acetic acid was about 0.98 or so, the ΔT_{f} of Equation 4 above by the monobasic ammonium phosphate was about 1.81 or so, and the ΔT_{f} of Equation 4 above by the potassium acetate was about 18.78 or so.

The silica sol was prepared by stirring the mixture at room temperature (about 23°C) at a speed of about 500 rpm for about 15 minutes.

Ceramic fiber wool (Morgan, EST-G PAPER, thickness: 3mm) was placed on the conveyor belt of a gel casting device, and the silica sol was impregnated into the ceramic fiber wool using a spike roller. Subsequently, while moving the conveyor belt, gelation was performed at room temperature (about 25°C) to form a silica gel, thereby manufacturing a composite material comprising the vaporizable substance (water). Upon the manufacture of the composite material, the ratio (S: C) of the weight (S) of the silica gel and the weight (C) of the ceramic fiber wool was set to about 5:20 or so. In the composite material, the water content was about 53.8 weight% or so, the inorganic gel (silica gel) content was about 3.01 weight% or so, and the inorganic fiber (ceramic fiber wool) content was about 12.06 weight% or so.

The ceramic fiber wool had a tensile strength of about 0.1 MPa or so, a compressive strength of about 150 kPa or so, a Young's modulus of about 3 MPa or so, a density of about 2 g/cm³ or so, and a softening point of about 800°C or so. The tensile strength, compressive strength, and Young's modulus can be measured by the method described in Example 1.

### Manufacturing of fire-extinguishing device

A fire-extinguishing device was manufactured in the same manner as in Example 1 using the composite material.

### Comparative Example 1.

A composite material and a fire-extinguishing device were manufactured in the same manner as in Example 1, except that the ceramic fiber wool was changed. As the ceramic fiber wool, Morgan's EST-G PAPER (thickness: 3 mm) was used.

### Comparative Example 2.

### Preparation of composite material

A silica sol was prepared in the same manner as in Example 1, except that a weight ratio (W: S: A: N: K: T) of distilled water (W), SiO₂ (S) in the liquid sodium silicate, a hydrochloric acid aqueous solution (A), monobasic ammonium phosphate (N), potassium acetate (K), and starch (T) was about 77:4:3.1:7:11:0.7 or so.

In the mixture for preparing the silica sol, the molal concentration of the hydrochloric acid was about 0.38 or so, the molal concentration of the monobasic ammonium phosphate was about 0.77 or so, and the molal concentration of the potassium acetate was about 1.42 or so, based on distilled water. In the mixture, the ΔT_{f} of Equation 4 above by the hydrochloric acid was about 1.40 or so, the ΔT_{f} of Equation 4 above by the monobasic ammonium phosphate was about 2.87 or so, and the ΔT_{f} of Equation 4 above by the potassium acetate was about 5.28 or so.

A composite material and a fire-extinguishing device were manufactured in the same manner as in Example 2, except that the silica sol was used.

In the composite material of Comparative Example 2, the water content was about 64.8 weight% or so, the inorganic gel (silica gel) content was about 3.37 weight% or so, and the inorganic fiber (ceramic fiber wool) content was about 13.47 weight% or so.

The evaluation results for the fire-extinguishing devices are shown in Table 1 below.

**[Table 1]**

| | Example | | Comparative Example | |
|---|---|---|---|---|
| | 1 | 2 | 1 | 2 |
| T_{Fi} (mm) | 2.53 | 2.58 | 2.49 | 2.61 |
| T_{Ff} (mm) | 2.436 | 2.473 | 2.194 | 2.5 |
| ΔT_{F} (%) | 3.859 | 4.327 | 13.491 | 4.4 |
| Tᵢ (mm) | 3.12 | 3.21 | 3.18 | 2.98 |
| T_{f} (mm) | 2.989 | 3.071 | 2.784 | 2.655 |
| ΔT (%) | 4.383 | 4.523 | 14.22 | 12.24 |
| Convection | Pass | Pass | NG | NG |
| Chain ignition | Pass | Pass | NG | NG |

In Table 1, T_{Fi} and T_{Ff} are the thicknesses of the ceramic fiber wool applied to the composite material measured according to the manner described in "6. Thickness measurement" above, T_{Fi} (before) is the thickness of the ceramic fiber wool before high-temperature exposure, and T_{Ff} (after) is the thickness of the ceramic fiber wool after high-temperature exposure. ΔT_{F} in Table 1 is a value calculated by the equation 100 × {T_{Fi}-T_{Ff}}/T_{Ff}. In Table 1, Tᵢ and T_{f} are the thicknesses of the composite material measured according to the manner described in "6. Thickness measurement" above, Tᵢ is the thickness of the composite material before high-temperature exposure, and T_{f} is the thickness of the composite material after high-temperature exposure. ΔT in Table 1 is a value calculated by the equation 100 × {Tᵢ-T_{f}}/T_{f}.

From Table 1, by comprising an inorganic gel (silica gel) with an appropriate network in the composite material and using fibers with a low thickness change rate as the inorganic fibers, the overall thickness change rate (ΔT) of the composite material can be adjusted to be small, and it can be confirmed that the composite material with such a small thickness change rate exhibits excellent performance in fire-extinguishing devices.

In Comparative Example 1, the thickness change rate of the inorganic fibers was large, so that the composite material did not exhibit a stable fire-extinguishing function. In Comparative Example 2, the thickness change rate of the inorganic fibers was low, but the inorganic gel network was not properly formed, whereby the thickness change rate of the composite material was large, so that the fire-extinguishing function was not effectively exerted.

## Claims

1. A composite material, comprising:
a vaporizable substance; and
one or more selected from the group consisting of an inorganic gel and inorganic fibers,
wherein an absolute value of the ΔT in Equation 1 below is 12% or less: [Equation 1] $ΔT = 100 \times \left({T}_{i}-{T}_{f}\right) / {T}_{f}$
wherein the T_{f} is a thickness of the composite material after being maintained at a temperature T for 1 hour, and the Tᵢ is a thickness of the composite material before being maintained at a temperature T for 1 hour, and the temperature T satisfies Equation 2 below: [Equation 2] $45 ° C to 55 ° C = T - {T}_{b}$
wherein the T is the temperature T, and the T_{b} is the boiling point of the vaporizable substance at 1 atm.

2. The composite material according to claim 1, wherein the vaporizable substance has a boiling point in a range of 80°C to 120°C.

3. The composite material according to claim 1, wherein the vaporizable substance is water.

4. The composite material according to claim 1, wherein the vaporizable substance has a content in a range of 40 to 90 weight%.

5. The composite material according to claim 1, wherein an amount of the inorganic gel is in a range of 0.5 parts by weight or more relative to 100 parts by weight of the vaporizable substance.

6. The composite material according to claim 1, wherein the inorganic fibers have an absolute value of ΔT_{F} in Equation 3 below in a range of 13% or less: [Equation 3] ${ΔT}_{F} = 100 \times \left({T}_{Fi}-{T}_{Ff}\right) / {T}_{Ff}$ wherein the T_{Ff} is a thickness of the inorganic fibers after maintaining them at a temperature T for 1 hour, and the T_{Fi} is a thickness of the inorganic fibers before maintaining them at a temperature T for 1 hour, and the temperature T satisfies the Equation 2.

7. The composite material according to claim 1, wherein an amount of the inorganic fibers is in a range of 5 to 70 parts by weight relative to 100 parts by weight of the vaporizable substance.

8. The composite material according to claim 1, comprising the inorganic gel and the inorganic fibers.

9. The composite material according to claim 8, wherein the inorganic gel is attached to the inorganic fibers, or the inorganic gel and the inorganic fibers are entangled with each other.

10. The composite material according to claim 1, further comprising an ionic compound.

11. The composite material according to claim 10, comprising an ionic compound such that the ΔT_{f} in Equation 4 below is in a range of 5 to 50: [Equation 4] ${ΔT}_{f} = {K}_{f} \times M \times I$ wherein the K_{f} is the freezing point depression constant of the vaporizable substance, the M is the molal concentration of the ionic compound relative to the vaporizable substance, and the I is the mole number of ions generated by dissociation of 1 mole of the ionic compound.

12. The composite material according to claim 10, wherein the solubility of the ionic compound in 100 g of water at 25°C is 10 or more.

13. The composite material according to claim 10, wherein the ionic compound is one or more selected from the group consisting of formate, acetate, carbonate, and sulfate.

14. The composite material according to claim 1, further comprising a carbonizable organic substance.

15. The composite material according to claim 14, further comprising a carbonization catalyst.

16. A fire-extinguishing device comprising:
a case; and
the composite material according to any one of claims 1 to 15 present in the case.
